Europäisches Patentamt

European Patent Office

Office européen des brevets

(11) Veröffentlichungsnummer: **0 374 287**
**A1**

(12) **EUROPÄISCHE PATENTANMELDUNG**

(21) Anmeldenummer: **88121412.6**

(22) Anmeldetag: **21.12.88**

(51) Int. Cl.5: **H01S 3/03**

(43) Veröffentlichungstag der Anmeldung:
**27.06.90 Patentblatt 90/26**

(84) Benannte Vertragsstaaten:
**AT BE CH DE ES FR GB GR IT LI LU NL SE**

(71) Anmelder: **COHERENT GENERAL, INC.**
**Picker Road P.O. Box 537**
**Sturbridge, MA 01566(US)**

(72) Erfinder: **Paul, Wolfgang**
**Weichstrasse 96a**
**D-8084 Schlagenhofen(DE)**
Erfinder: **Hecht, Hartmuth**
**Vogelhartstrasse 35**
**D-8000 München 40(DE)**
Erfinder: **Baumgartner, Anton**
**Karlsbader Strasse 2**
**D-8061 Niederroth(DE)**

(74) Vertreter: **Patentanwälte Kirschner & Grosse**
**Forstenrieder Allee 59**
**D-8000 München 71(DE)**

(54) **Gaslaser.**

(57) Ein Gaslaser weist in seinem Lasergaskreislauf eine absperrbare Bypassleitung (4) mit einer Ausfriereinrichtung (28) für Wasserdampf auf. Im Normalbetrieb strömt damit das Lasergas sowohl durch die Bypassleitung (4), als auch durch den restlichen Teil des Lasergaskreislaufes, so daß der Wasserdampfanteil in dem durch die Bypassleitung strömenden den Lasergas in der Ausfriereinrichtung (28) teilweise ausgefroren wird. Zum Abtauen der Ausfriereinrichtung (28) wird die Bypassleitung (4) von dem restlichen Teil des Lasergaskreislaufes getrennt und gegebenenfalls mehrmals evakuiert und mit frischem lasergas gespült. Der Gaslaser kommt im Normalbetrieb mit wesentlich weniger Frischgaszufuhr aus.

Fig. 1

Xerox Copy Centre

# Gaslaser

Die Erfindung betrifft einen Gaslaser mit einem Resonator, der in einem Lasergaskreislauf liegt, der eine Zufuhrleitung und eine Auslaßleitung für auszutauschendes Lasergas aufweist.

Bei einem solchen Gaslaser wird das Lasergas in dem Lasergaskreislauf durch eine Umwälzpumpe, beispielsweise eine Rootspumpe, ungewälzt und das auszutauschende Lasergas wird durch eine weitere Pumpe über die Auslaßleitung abgesaugt. Bei einem solchen Gaslaser, beispielsweise bei einem $CO_2$-Hochleistungslaser, herrscht auf der Hochdruckseite des Lasergaskreislaufes, d.h. zwischen der Rootspumpe und dem Resonator, ein Druck von beispielsweise 120 bis 135 mbar. Daher läßt es sich nicht vermeiden, daß aus der Umgebung durch Leckage Gas in den Lasergaskreislauf eindringt, das die Laserleistung beeinträchtigt. Aus diesem Grund wird dem Lasergaskreislauf Frischgas zugeführt und eine entsprechende Menge an Lasergas wird aus dem Lasergaskreislauf evakuiert, um die Zusammensetzung des Lasergases in dem Lasergaskreislauf auf einem Reinheitsniveau zu halten, bei dem der Laser seine Nennleistung abgibt.

Der Verbrauch an Frischgas ist bei dem Betrieb des Gaslasers ein wesentlicher Kostenfaktor. Daher ist es erwünscht, den Frischgasverbrauch möglichst niedrig zu halten. Es wurde bereits vesucht, mit einer Adsorptionseinrichtung in dem Lasergaskreislauf das Lasergas durch Adsorption von unerwünschten Gaskomponenten zu reinigen und damit den Bedarf an Frischgas zu reduzieren. Solche Adsorptionseinrichtungen haben jedoch unerwünschte Nebenwirkungen und beeinflussen auch den Betrieb des Gaslasers selbst. Sie sind schnell gesättigt, und das Regenerieren ist umständlich.

Demgegenüber liegt der Erfindung die Aufgabe zugrunde, einen Gaslaser dahingehend zu verbessern, daß der Bedarf an Frischgas ohne unkontrollierbare Nebenwirkungen auf den Gaslaser reduziert werden kann.

Zur Lösung dieser Aufgabe ist der erfindungsgemäße Gaslaser gekennzeichnet durch eine Wasserdampf-Ausfriereinrichtung in dem Lasergaskreislauf. Indem das Lasergas durch die Ausfriereinrichtung strömt, wird dem Lasergas allein der Wasserdampf entzogen. Die Laserleistung bleibt auf der nennleistung oder liegt sogar darüber.

Bisher war man der Auffassung, daß mehrere Komponenten des durch die Leckage in den Lasergaskreislauf eindringenden Gases für den Abfall der Laserleistung verantwortlich sind. Daher hat man auch die Adsorptionseinrichtung eingesetzt, um Fremdgase möglichst weitgehend zu entfernen. Der Erfindung liegt dagegen die Erkenntnis zugrunde, daß praktisch allein der durch die Leckage eindringende Wasserdampf für die Verminderung der Laserleistung veranwortlich ist, und daß durch ein gezieltes Entfernen des Wasserdampfanteils in dem Lasergas der Einfluß der Leckage fast beseitigt werden kann.

Nach einer vorteilhaften Ausgestaltung der Erfindung ist der Gaslaser dadurch gekennzeichnet, daß die Ausfriereinrichtung in einer Bypassleitung des Lasergaskreislaufes angeordnet ist. Dadurch kann erreicht werden, daß nicht das gesamte Lasergas des Lasergaskreislaufes durch die Ausfriereinrichtung strömt, was ausreichend ist, um den gewünschten ausfriereffekt zu erreichen.

Nach einer weiteren vorteilhaften Ausgestaltung der Erfindung ist der Gaslaser dadurch gekennzeichnet, daß in der Bypassleitung in Strömungsrichtung des Lasergases vor der Ausfriereinrichtung ein Drosselventil vorgesehen ist. Damit läßt sich die Durchflußmenge durch die Bypassleitung und damit durch die ausfriereinrichtung steuern.

Nach einer weiteren vorteilhaften Ausgestaltung der Erfindung ist der Gaslaser dadurch gekennzeichnet, daß in der bypassleitung in Strömungsrichtung des Lasergases vor und hinter der Ausfriereinrichtung Ventile angeordnet sind. Durch Schließen dieser Ventile kann die Bypassleitung abgesperrt werden, so daß die Ausfriereinrichtung abgetaut werden kann, ohne den restilichen Teil des Lasergaskreislaufes einbeziehen zu müssen.

Nach einer weiteren vorteilhaften Ausgestaltung der Erfindung ist der Gaslaser dadurch gekennzeichnet, daß die Bypassleitung zwischen der Ausfriereinrichtung und dem in Strömungsrichtung des Lasergases dahinterliegenden Ventil mit der Zufuhrleitung über eine Spülleitung mit Ventil verbunden ist, und daß die Bypassleitung zwischen der Ausfriereinrichtung und dem in Strömungsrichtung des Lasergases davorliegenden Ventil mit der Auslaßleitung über eine Ablaufleitung mit einem Ventil verbunden ist. Beim Abtauen der Ausfriereinrichtung kann über die Spülleitung und die Ablaufleitung die Ausfriereinrichtung mit frischem Lasergas gespült werden, so daß der Wasserdampf aus der Ausfriereinrichtung auf besonders einfache Weise nahezu vollständig entfernt werden kann.

Nach einer weiteren vorteilhaften Ausgestaltung der Erfindung ist der Gaslaser dadurch gekennzeichnet, daß Einlaß und Auslaß der Bypassleitung zwischen einer Umwälzpumpe des Lasergaskreislaufes und dem Auslaß der Zufuhrleitung liegen. Damit liegt die Bypassleitung auf der Hochdruckseite der Umwälzpumpe und vor der Frischgaszufuhr, wobei an dieser Stelle des Lasergaskreislaufes die Ausfriereinrichtung am effektivsten einsetzbar ist, da hier der Wasserdampfpartialdruch in dem Lasergas am größten ist.

Nach einer weiteren vorteilhaften Ausgestaltung der Erfindung ist der Gaslaser dadurch gekennzeichnet, daß die Ausfriereinrichtung einen in einem Vakuumbehälter angeordneten Kühlfinger umfaßt.

Nach einer weiteren vorteilhaften Ausgestaltung der Erfindung ist der Gaslaser dadurch gekennzeichnet, daß in der Ausfriereinrichtung eine Abtaueinrichtung vorgesehen ist.

Schließlich ist nach einer weiteren vorteilhaften Ausgestaltung der Erfindung der Gaslaser mit einer Pumpe zum Evakuieren des Lasers dadurch gekennzeichnet, daß die Pumpe eine Gasballastpumpe ist. Damit ist ein befriedigendes Absaugen des Wasserdampfs aus der Ausfriereinrichtung gewährleistet.

Ein Ausführungsbeispiel der Erfindung wird nun anhand der beiliegenden Zeichnungen beschrieben. Es zeigen:

Fig. 1 ein Schaltungsdiagramm einer Gaslaseranlage; und

Fig. 2 eine grafische Darstellung, die die Wirkung der Ausfriereinrichtung auf der Laserleistung darstellt.

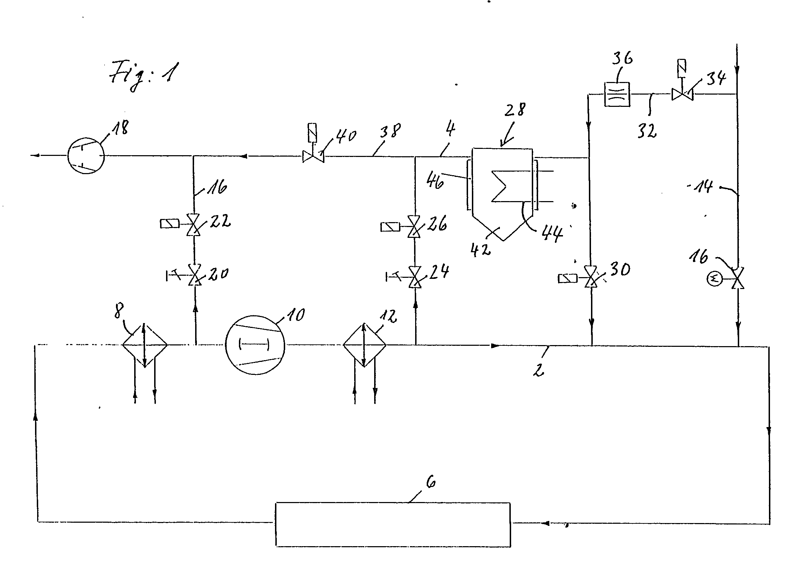

Gemäß Fig. 1 umfaßt der Lasergaskreislauf eine Ringleitung 2 und eine Bypassleitung 4. In der Ringleitung 2 liegt ein Resonator 6, ein Wärmetauscher 8, eine Umwälzpumpe 10, die in dem Ausführungsbeispiel eine Rootspumpe ist, und ein weiterer Wärmetauscher 12 in dieser Reihenfolge in Strömungsrichtung des Lasergases in der Ringleitung 2. Eine Zufuhrleitung 14, die ein Drosselventil 6 enthält, mündet mit ihrem Auslaß in Strömungsrichtung vor dem Resonator 6 in die Ringleitung 2. Eine Auslaßleitung 16 führt von der Ringleitung 2 zwischen dem Wärmetauscher 8 und der Umwälzpumpe 10 zu einer Pumpe 18, über die das verbrauchte Lasergas abgepumpt wird. In der Auslaßleitung 16 sind ein Drosselventil 20 und ein Ventil 22 angeordnet.

Die Bypassleitung 4 zweigt in Strömungsrichtung des Lasergases hinter dem Wärmetauscher 12 über einen Einlaß von der Ringleitung 2 ab und führt über ein Drosselventil 24, ein Ventil 26, eine Wasserdampf-Abscheideeinrichtung 28 und ein Ventil 30 an einem Auslaß zu der Ringleitung 2 zurück. Die Bypassleitung 4 ist mit der Zufuhrleitung 14 über eine Spülleitung 32 verbunden, die ein Ventil 34 mündet in die Bypassleitung 4 zwischen der ausfriereinrichtung 28 und dem da hinterliegenden Ventil 30. Die Bypassleitung 4 ist über eine Ablaufleitung 38 mit der Auslassleitung 16 verbunden, wobei die Ablaufleitung 38 von der Bypaßleitung 4 zwischen der Ausfriereinrichtung 28 und dem Ventil 26 abzweigt und die auslaßleitung 16 zwischen dem Ventil 22 und der Pumpe 18 mündet. Die Ablaufleitung 38 umfaßt ein Ventil 40.

Die Ausfriereinrichtung 28 weist einen Vakuumbehälter 42 auf, in dem ein Kühlfinger 44 angeordnet ist. Gegenüber dem Kühlfinger 44 ist eine Abtaueinrichtung 46 in Form einer Heizung vorgesehen.

Bei Normalbetrieb des Lasers sind die Ventile 34 und 40 geschlossen und das Lasergas wird durch die Pumpe 10 in der Ringleitung 2 und durch die Bypassleitung 4 umgewälzt. Auszutauschendes Lasergas wird über das Drosselventil 20, das auf minimalen Gasverbrauch eingestellt ist, und die Pumpe 18 aus der Ringleitung abgesaugt, und eine entsprechende Menge an Frischgas wird der Ringleitung 2 über das Drosselventil 16 zugeführt. Die Ventile 22, 26 und 30 sind geöffnet und die Durchflußmenge in der Bypassleitung 4 wird mit dem Drosselventil 24 eingestellt. Der Wasserdampf, der in dem Lasergas enthalten ist, das durch die Bypassleitung 4 strömt, wird an dem Kühlfinger 44 teilweise abgeschieden. Dadurch wird der Wasserdampfanteil in dem Lasergas in dem Lasergaskreislauf soweit reduziert, daß die Frischgaszufuhr auf ein Minimum reduziert oder ganz unterlassen werden kann.

Das an dem Kühlfinger 44 ausgefrorene Wasser muß von Zeit zu Zeit entfernt werden, damit der Kühlfinger den erforderlichen Wirkungsgrad behält. zum Abtauen wird die Ausfriereinrichtung 28 abgeschaltet und die Ventile 22, 26, 30 werden geschlossen. Durch das Ventil 34 und die Drosseleinrichtung 36 wird der Behälter 42 der Ausfriereinrichtung Abscheideeinrichtung 28 mit Lasergas auf Atmosphärendruck belüftet. Die Abtaueinrichtung 46, die eine Heizung und/oder ein Warmluftgebläse aufweisten kann, wird eingeschaltet und bewirkt eine Erwärmung des Behälters 42 bzw. ein Abtauen des Kühlfingers 44, so daß nach kurzer Zeit das in der Ausfriereinrichtung 28 befindliche Wasser in flüssigem Zustand vorliegt. Sodann wird das Ventil 34 geschlossen und das Ventil 40 wird geöffnet. Die Pumpe 18 dann den Wasserdampf und das in dem Behälter 42 enthaltene Gas ab, wobei in dem Behälter 42 ein Druck unterhalb des Sättigungsdampfdrucks des Wassers bezüglich der gerade gegebenen Temperatur erreicht wird, so daß das Wassergas völlig abgepumpt werden kann. Die Pumpe 18 ist zu diesem Zweck als wasserdampfverträgliche Pumpe, z.B. als Gasballastpumpe, ausgebildet. Am Ende der Wasserabpumpphase wird das Ventil 40 geschlossen und das Ventil 34 wird geöffnet. Der Behälter 42 wird erneut geflutet. Danach wird das Ventil 34 geschlossen und das Ventil 40 wird weider geöffnet und es wird erneut über die Pumpe 18 abgepumpt. Dieser Vorgang kann mehrmals wiederholt werden, um den Wasserdampf nahezu völlig aus dem Behälter 42 zu entfernen. Danach wird das Ventil 40 wieder geschlossen und die Ausfriereinrichtung 28 eingeschaltet. Die Ventile 26 und 30 werden wieder geöffnet, so daß der Laser wieder in der oben beschriebenen Normalbetriebsweise arbeiten kann.

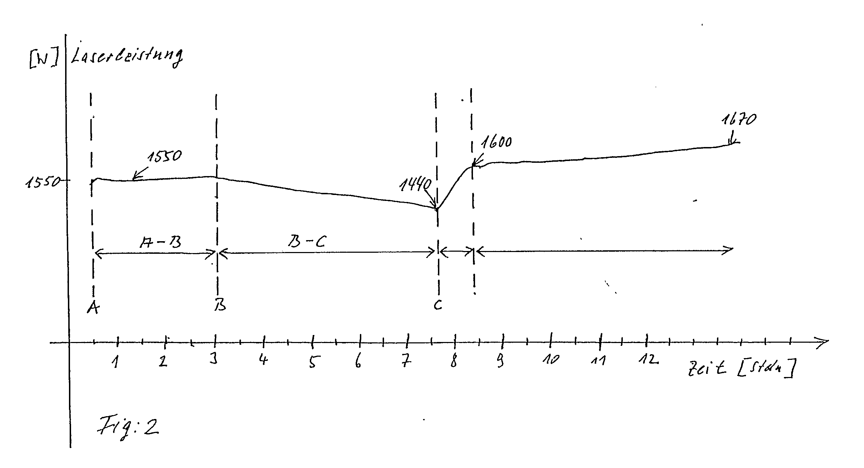

Fig. 2 zeigt die Auswirkung der Wasserdampf-Ausfriereinrichtung 28 bei einem CO2-Hochleistungslaser mit einer Nennleistung von ca. 1.500 Watt. Der Kurvenverlauf in dem Bereich A - B zeigt die Laserleistung bei Normalbetrieb mit Frischgaszufuhr und ohne Einschaltung der Ausfriereinrichtung 28. Die Laserleistung betrug ca. 1.550 Watt. An dem Punkt B wurde die Frischgaszufuhr abgeschaltet und das Ventil 20 geschlossen. Danach fiel die Laserleistung bis zu dem Punkt C auf ca. 1.440 Watt ab. An dem Punkt C wurde die Ausfriereinrichtung eingeschaltet, wobei die Laserleistung in dem Bereich C - D auf ca. 1.600 Watt anstieg. Nach dem Punkt D wurde der Laser weiter unter Einschaltung der Ausfriereinrichtung betrieben, wobei sich seine Laserleistung zwischen ca. 1.640 bis 1.670 Watt betrug. Ab dem Punkt C wurde kein Frischgas zugeführt, so daß die Meßkurve zeigt, daß mit Hilfe der Ausfriereinrichtung der Wasserdampf in dem Lasergaskreislauf soweit reduziert wird, daß zur Beibehaltung der Nennlaserleistung und zum Ausgleich der Leckage des Systems keine Frischgaszufuhr mehr erforderlich ist. In der Praxis kann es trotzdem erwünscht sein, die Frischgaszufuhr weiter auf einem minimalen Niveau beizubehalten, wobei dann trotz einer eventuellen geringen Frischgaszufuhr die Laserleistung auf dem Nennleistungsniveau oder darüber liegt.

## Ansprüche

1. Gaslaser mit einem Resonator, der in einem Lasergaskreislauf liegt, der eine Zufuhrleitung und eine Auslaßleitung zum Ableiten für auszutauschendes Lasergas aufweist, **gekennzeichnet durch** eine Wasserdampf-Ausfriereinrichtung (28) in dem Lasergaskreislauf.

2. Gaslaser nach Anspruch 1, **dadurch gekennzeichnet**, daß die Ausfriereinrichtung (28) in einer Bypassleitung (4) des Lasergaskreislaufs angeordnet ist.

3. Gaslaser nach Anspruch 2, **dadurch gekennzeichnet**, daß in der Bypassleitung (4) in Strömungsrichtung des Lasergases vor der Ausfriereinrichtung (28) ein Drosselventil 924) angeordnet ist.

4. Gaslaser nach Anspruch 2 oder 3, **dadurch gekennzeichnet**, daß in der Bypassleitung (4) in Strömungsrichtung des Lasergases vor und hinter der Ausfriereinrichtung (28) Ventile (26, 30) angeordnet sind.

5. Gaslaser nach einem der Ansprüche 2 bis 4, **dadurch gekennzeichnet**, daß die Bypassleitung (4) zwischen der Ausfriereinrichtung (28) und dem in Strömungsrichtung des Lasergases dahinterliegenden Ventil (30) mit der Frischgaszufuhrleitung (14) über eine Spülleitung (32) mit einem Ventil (34) verbunden ist, und daß die Bypassleitung (4) zwischen der Ausfriereinrichtung (28) und dem davorliegenden Ventil (26) mit der Auslaßleitung (16) über eine Ablaufleitung (28) mit einem Ventil (40) verbunden ist.

6. Gaslaser nach Anspruch 2, **dadurch gekennzeichnet**, daß Einlaß und Auslaß der Bypassleitung zwischen einer Umwälzpumpe (10) in dem Lasergaskreislauf und dem Auslaß der Frischgas-Zufuhrleitung (14) liegen.

7. Gaslaser nach einem der vorhergehenden Ansprüche, **dadurch gekennzeichnet**, daß die Ausfriereinrichtung (28) einen in einem Vakuumbehälter (42) angeordneten Kühlfinger (44) umfaßt.

8. Gaslaser nach Anspruch 7, **dadurch gekennzeichnet**, daß eine Abtaueinrichtung (46) in der Ausfriereinrichtung (28) vorgesehen ist.

9. Gaslaser nach einem der vorhergehenden Ansprüche mit einer Pumpe zum Evakuieren des Lasers, **dadurch gekennzeichnet**, daß die Pumpe (18) eine Gasballastpumpe ist.

Fig: 1

EP 0 374 287 A1

Fig: 2

EP 0 374 287 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 263 994 (SIEMENS) <br> * Zusammenfassung; Figur 1 * <br> --- | 1 | H 01 S 3/03 |
| A | US-A-3 723 902 (C.K.N. PATEL) <br> * Zusammenfassung; Figuren 4,6 * <br> --- | 1 | |
| A | US-A-3 855 543 (A. TIMMERMANS et al.) <br> * Zusammenfassung * <br> ----- | 1 | |

**RECHERCHIERTE SACHGEBIETE (Int. Cl.5)**

H 01 S

Der vorliegende Recherchenbericht wurde für alle Patentansprüche erstellt

| Recherchenort | Abschlußdatum der Recherche | Prüfer |
|---|---|---|
| DEN HAAG | 17-07-1989 | MALIC K. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
............................................................
& : Mitglied der gleichen Patentfamilie, übereinstimmendes Dokument

EPO FORM 1503 03.82 (P0403)